# EUROPEAN PATENT APPLICATION

(11) **EP 4 810 726 A1**
(43) Date of publication of application: **23.09.2026**
(21) Application number: 25778809.1
(22) Date of filing: 07.03.2025
(51) Int. Cl.: E02F 9/00, B60L 5/00

(54) **ELECTRIC CONSTRUCTION MACHINE**

(30) Priority: 29.03.2024 JP 2024055583
(71) Applicant: Hitachi Construction Machinery Co., Ltd., Tokyo 110-0015 (JP)
(72) Inventor: HISAMITSU, Hidetoshi, Tsuchiura-shi, Ibaraki 300-0013 (JP); TAKAGI, Daisuke, Tsuchiura-shi, Ibaraki 300-0013 (JP)
(74) Representative: Manitz Finsterwald Patent- und Rechtsanwaltspartnerschaft mbB
(86) International application number: PCT/JP2025/008528
(87) International publication number: WO 2025/204763

(57) **Abstract**

An electric construction machine 1 according to the present invention has a lower travel body 2 having a right travel device 21 and a left travel device 22 that are provided as a left/right pair and that move forward/backward independently of each other, the electric construction machine 1 being connected to an external power source via a cable 8 to be driven, the electric construction machine including: a cable reel device 6 that is provided in a rear end portion between the right travel device 21 and the left travel device 22 as the pair of the lower travel body 2, the cable reel device 6 accommodating the cable 8 in a wound state, reeling the cable 8 through forward rotation drive, unreeling the cable 8 through reverse rotation drive; and a control device 14 that controls a rotation direction of the cable reel device 6 in accordance with an operation state of the lower travel body 2.

## Description

### Technical Field

The present invention relates to an electric construction machine including a cable reel device.

### Background Art

One example of a method for supplying power to an electric construction machine (for example, an electric hydraulic excavator) that has been adopted is supplying power such that a cable is connected, from a side of a power substation or equipment such as a disconnector, to a power supply terminal box mounted on a rear side of a vehicle body of a truck frame or a cable reel device having an automatic reeling function. The cable is arranged on the rear side of the vehicle body for preventing the cable from being run over. In the case of the power supply terminal box, excess cables are arranged around the vehicle body, which increases a risk of running over the cables in traveling or turning a lower travel body. In the case of the cable reel device, the mechanism is configured such that the cable is constantly reeled, and the cable is unreeled when the vehicle body moves forward and the cable is reeled when the vehicle body moves backward, so that the cable is constantly kept taut. Therefore, no excess cable is arranged around the vehicle body, which can reduce the risk of running over the cable. However, when the lower travel body turns or moves backward while making a left or a right turn, the cable reel device, which constantly reels the cable, still has a higher risk of running over the cable depending on the positional relationship between the vehicle body and the cable.

Regarding the aforementioned circumferences, in order to ensure the prevention of accidents such as cable cutting, Patent Literature 1 discloses a technique in which when a winding or an unwinding limit of a cable is reached, a vehicle body is automatically stopped so as to prevent the cable from being wound or rewound beyond the limit.

### Citation List

### Patent Literature

Patent Literature 1: JP S49-030649 A

### Summary of Invention

### Technical Problem

The technique proposed in Patent Literature 1 can detect the cable winding and rewinding limits, but cannot detect the cable when a lower travel body turns or moves backward while making a left or a right turn in the case where the cable winding and rewinding limits are not reached. Further, after detection of the cable winding and rewinding limits, the traveling of the vehicle body can be restricted, but a person is required to get involved in moving the cable depending on the position of the cable, which puts the person at risk of approaching the vehicle body or moving a high-voltage cable, and further, an increase in downtime of the vehicle body remains as a problem.

The present invention has been made in view of the aforementioned problems, and has an object of providing an electric construction machine that avoids a lower travel body and a ground contact point of a cable from approaching to each other when the lower travel body turns or moves backward while making a left or a right turn and that contributes to reducing downtime of a vehicle body.

### Solution to Problem

In order to achieve the aforementioned object, an electric construction machine according to the present invention has a lower travel body having travel devices that are provided as a left/right pair and that move forward/backward independently of each other, the electric construction machine being connected to an external power source via a cable to be driven, the electric construction machine including: a cable reel device that is provided in a rear end portion between the travel devices as the pair of the lower travel body, the cable reel device accommodating the cable in a wound state, reeling the cable through forward rotation drive, unreeling the cable through reverse rotation drive; and a controller that controls a rotation direction of the cable reel device in accordance with an operation state of the lower travel body.

### Advantageous Effects of Invention

According to the present invention, by unreeling a cable when a lower travel body turns or moves backward while making a left or a right turn, it is possible to separate a portion of the cable that is in contact with the ground from a vehicle body. Therefore, it is possible to prevent an accident of the cable from contacting the lower travel body or being run over.

Further features related to the present invention will become apparent from the description of the present specification and the accompanying drawings. Furthermore, problems, configurations, and advantageous effects other than those described above will become apparent from the following description of the embodiments.

### Brief Description of Drawings

Fig. 1 is a vehicle body layout view of an electric construction machine according to an embodiment.
Fig. 2 is a view showing an example of a configuration of cable wiring from a power station to an electric hydraulic excavator.
Fig. 3 is a block diagram showing a hardware configuration around a control device (controller) according to the embodiment.
Fig. 4 is a functional block diagram showing a functional configuration of the control device (controller) according to the embodiment.
Figs. 5 are views for explaining states in which a cable is run over during operation of the construction machine.
Figs. 6 are views for explaining whether or not a cable is run over depending on a ground contact position of the cable.
Fig. 7 is a table for explaining rotation control of a cable reel device according to the embodiment.
Fig. 8 is a flowchart showing processing executed by the control device (controller) in the embodiment.
Fig. 9 is a table for explaining rotation control of the cable reel device using a GPS signal according to the embodiment.
Figs. 10 are views for explaining states in which a turning direction of unreeling a cable is defined in accordance with a positional relationship between a disconnector and a vehicle body.
Figs. 11 are views for explaining states in which a turning direction of unreeling a cable is defined in accordance with a positional relationship between the disconnector and the vehicle body.
Fig. 12 is a table for explaining a relationship between an input direction of a travel lever and a time count according to the embodiment.
Fig. 13 is a vehicle body layout view of the electric construction machine according to another embodiment.
Figs. 14 are views for explaining the maximum length of a cable to be unreeled.

### Description of Embodiments

Hereinafter, the embodiments will be described with reference to the drawings. Note that in the following embodiments, an electric hydraulic excavator will be described as an example of an electric construction machine, but the electric construction machine is not limited thereto, and the application is also available to other vehicles as long as the electric construction machine includes travel devices that are provided as a left/right pair and that can move forward/backward independently of each other.

Note that "turning" used herein refers to a lower travel body of an electric construction machine rotating left or right on the spot or while moving forward or backward to change the advancing direction, which for example, refers to a case of rotating on the spot while moving the left/right travel devices of the lower travel body forward/backward individually, a case of steering while moving only one of the left/right travel devices forward/backward, or a case of steering while making one of the left/right travel devices rotate differently than the other. That is, the turning operation does not refer to a specific operation such as a U-turn. Further, regarding reeling of a cable, a rotation of a cable drum in a direction in which a cable is reeled around the cable drum is referred to as a "forward rotation," and conversely, a rotation of the cable drum in a direction in which the cable is unreeled from the cable drum is referred to as a "reverse rotation." In addition, the rotation of a cable reel device and the rotation of the cable drum are synonymous.

### [Embodiment 1]

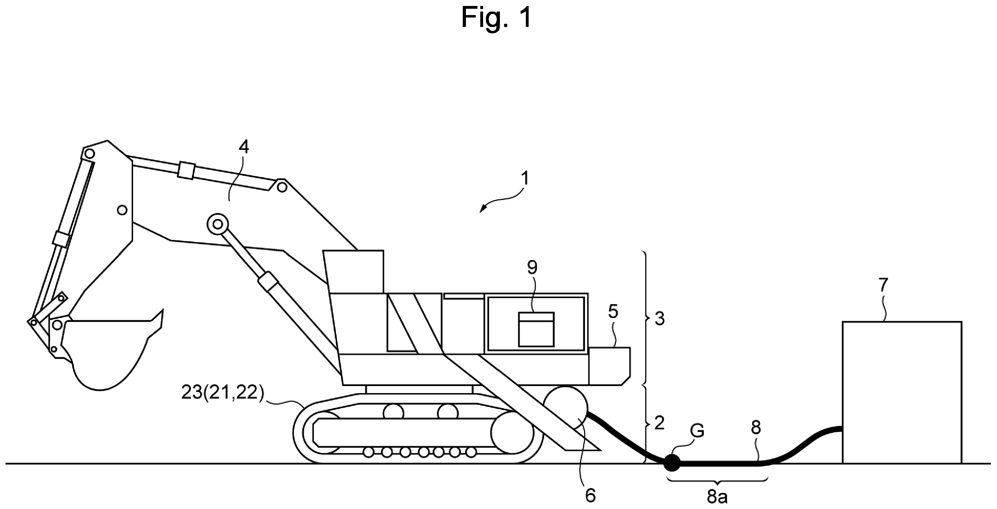

Fig. 1 is a vehicle body layout view of an electric hydraulic excavator (electric construction machine) 1 according to Embodiment 1. The electric hydraulic excavator 1 includes a lower travel body 2, an upper swing body 3 mounted in a swingable manner on the lower travel body 2, a front working device 4 connected to the upper swing body 3, and a counterweight 5 as a tip-over prevention measure for suppressing deviation of the center of gravity of a vehicle body when a heavy object is held by the front working device 4.

The lower travel body 2 includes a frame and a right travel device 21 and a left travel device 22 (collectively referred to as travel devices 23 in some cases) that are provided as a left/right pair of the frame. The right travel device 21 and the left travel device 22 each include a traveling motor and a crawler belt wound around the traveling motor. Further, in the present embodiment, the traveling motors of the right travel device 21 and the left travel device 22 are configured so that their rotation directions are controlled independently of each other. Therefore, the right travel device 21 and the left travel device 22 are provided as a left/right pair in the lower travel body 2 and move forward/backward independently of each other.

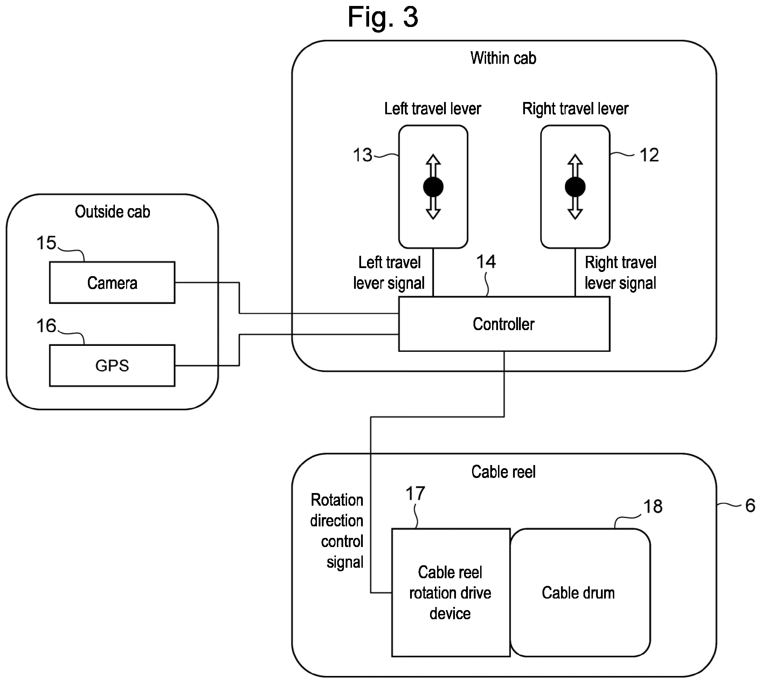

Further, in the present embodiment, a cable reel device 6 is mounted in a rear portion of the lower travel body 2, between the right travel device 21 and the left travel device 22 on the frame of the lower travel body 2. The cable reel device 6 (specifically, a cable drum 18 in the cable reel device 6 as shown in Fig. 3) accommodates a cable 8 in a wound state that is connected to an external power source and through which the electric hydraulic excavator 1 receives electric power as a drive source. In the cable reel device 6, the cable 8 is reeled through the forward rotation of the cable drum 18, and the cable 8 is unreeled through the reverse rotation of the cable drum 18. The cable 8 includes a portion 8a that is in contact with the ground, and a portion closest to the lower travel body 2 of this portion is defined as a ground contact point G. Note that the cable 8 is rigid enough to be unreeled and stretched when the cable drum 18 is rotated in reverse. Further, the cable reel device 6 is connected to a disconnector 7 via the cable 8. A three-phase induction motor 9 as a drive source of the electric hydraulic excavator 1 is supplied with electric power via the cable 8 from a power source on a facility side connected to the disconnector 7.

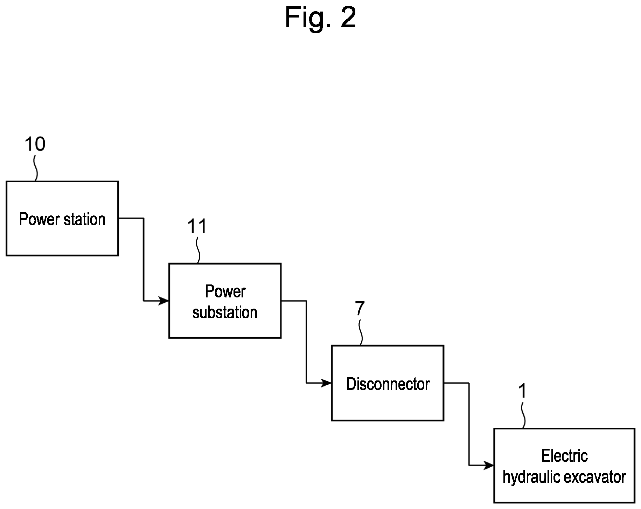

Fig. 2 is a view showing an example of a configuration of cable wiring from a power station to the electric hydraulic excavator. As shown in Fig. 2, first, the electric power generated in a power station 10 is transmitted to a power substation 11. The transmitted electric power is then transmitted to each disconnector 7 (only one of those is shown in Fig. 2) arranged on site, and the electric power supply to the electric hydraulic excavator 1 is controlled by means of the disconnector 7, which is a power device that switches the power circuit voltage on and off when no load is applied.

In this manner, when the disconnector 7 is arranged at a construction site, it is necessary to connect the disconnector 7 and the vehicle body using the cable 8 for transmitting the electric power to the electric construction machine 1. Therefore, handling the cable 8 without damaging it on site can be said to be a problem accompanying the adoption of the cable reel device 6. The present invention has been made in view of such a problem, and has an object of securing a certain distance or greater between the lower travel body 2 and the ground contact point of the cable 8 by controlling the rotation direction of the drum of the cable reel device 6. Hereinafter, first, a controller for controlling the rotation direction of the drum of the cable reel device 6 will be described.

Fig. 3 is a block diagram showing a hardware configuration around a control device (controller) 14 for the cable reel device 6 according to the embodiment. Note that the controller 14 is configured as a computer including, for example, a CPU (Central Processing Unit) and a memory, and is installed inside a cab of the electric hydraulic excavator 1, but is not necessarily required to be installed inside the cab.

As shown in Fig. 3, a right travel lever 12 and a left travel lever 13 are disposed inside the cab where the controller 14 is disposed. The right travel lever 12 moves the right travel device 21 forward when tilted forward and moves the right travel device 21 backward when tilted backward. Similarly, the left travel lever 13 moves the left travel device 22 forward when tilted forward and moves the left travel device 22 backward when tilted backward.

Further, the right travel lever 12 and the left travel lever 13 are configured so as to be able to adjust the forward/backward moving speed of the right travel device 21 and the left travel device 22 in accordance with the angle at which they are tilted. In addition, a camera 15 and a GPS 16 are attached outside the cab. Furthermore, the cable reel device 6 to which the controller 14 is connected is specifically composed of the cable drum 18 around which the cable 8 is wound and a cable reel rotation drive device 17 that rotationally drives the cable drum 18. The cable reel rotation drive device 17 includes, for example, a motor that actually rotationally drives the cable drum 18 and a motor driver that receives an operation signal from the controller 14 and controls the driving of the motor. In addition, the motor is preferably composed of, for example, a three-phase induction motor. In that case, the rotational driving of the cable reel device 6 is performed by inverter control or by three-phase switching control of the three-phase induction motor.

The controller 14 receives lever signals from the right travel lever 12 and the left travel lever 13 from the inside of the cab, and receives signals from the camera 15 and the GPS (Global Pointing System) 16 from the outside of the cab. Then, a control signal is output from the controller 14 to the cable reel rotation drive device 17 to control the rotation of the cable drum 18 around which the cable 8 is wound.

Although the details will be described later, in the embodiment, upon receiving operating lever signals from the right travel lever 12 and the left travel lever 13, the controller 14 determines whether the operations represented by the signals require the cable 8 to be unreeled, and if the cable 8 needs to be unreeled, transmits a control signal to the cable reel rotation drive device 17 to rotate the cable drum 18 in the direction in which the cable 8 is unreeled. In the other states, the cable drum 18 is constantly biased in the direction in which the cable 8 is reeled. However, this biasing force is set to the extent that when a tension of a certain level or greater is exerted on the cable 8 due to the forward movement of the vehicle body or the like, the cable 8 is pulled out from the cable drum 18.

Further, in another embodiment, the controller 14 receives signals from the camera 15 and the GPS 16 in addition to signals from the right travel lever 12 and the left travel lever 13, and determines whether or not the cable 8 should be unreeled. These will also be described in detail later.

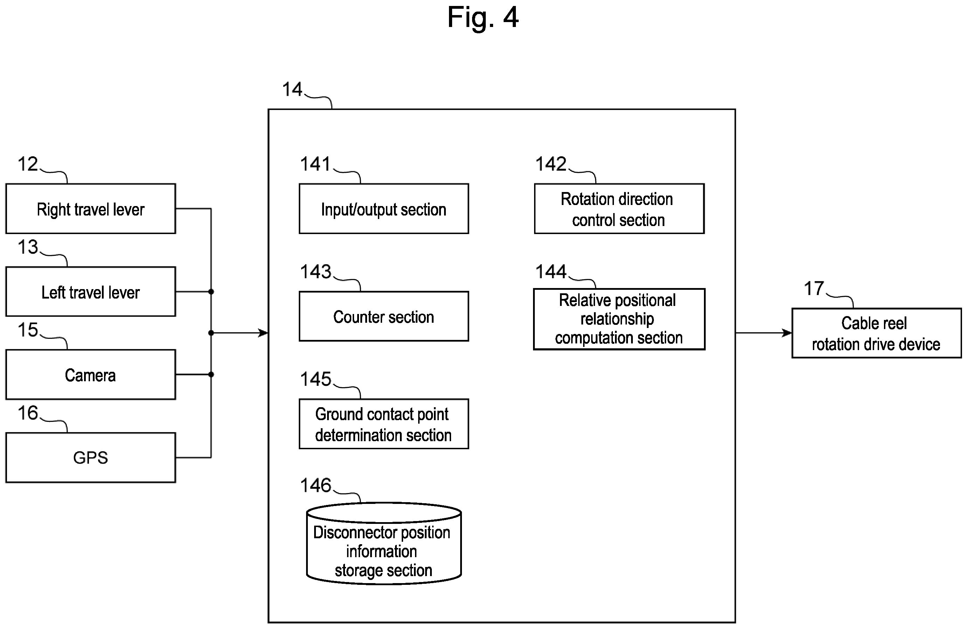

Fig. 4 is a functional block diagram showing functional sections of the controller 14 common to the embodiments of the present invention. As shown in Fig. 4, the controller 14 includes, as the functional sections, an input/output section 141, a rotation direction control section 142, a counter section 143, a relative positional relationship computation section 144, and a ground contact point determination section 145, and additionally, a disconnector position information storage section 146 that stores disconnector position information. Each of these sections represents each function of the controller 14 that is implemented by, for example, a CPU executing a computer program stored in the memory.

The input/output section 141 controls the input/output of signals between the controller 14 and various devices connected to the controller 14. The rotation direction control section 142 normally outputs a command signal to rotate the cable drum 18 in the direction in which the cable 8 is reeled, but when determining that the cable 8 described above needs to be unreeled, generates a signal to command the cable reel rotation drive device 17 to perform such a matter. In response to the operation signals received from the right travel lever 12 and the left travel lever 13, the counter section 143 counts the time during which the operation signals are being input. The relative positional relationship computation section 144 computes the relative positional relationship between the vehicle body and the disconnector 7 based on the position information on the vehicle body itself received from the GPS 16 and the position information on the disconnector 7 recorded in the disconnector position information storage section 146*.* Based on an image received from the camera 15, the ground contact point determination section 145 determines the position of the ground contact point G, which is the portion closest to the lower travel body 2 of the portion 8a of the cable 8 that is in contact with the ground. The disconnector position information storage section 146 records position information on the disconnector 7 installed on site.

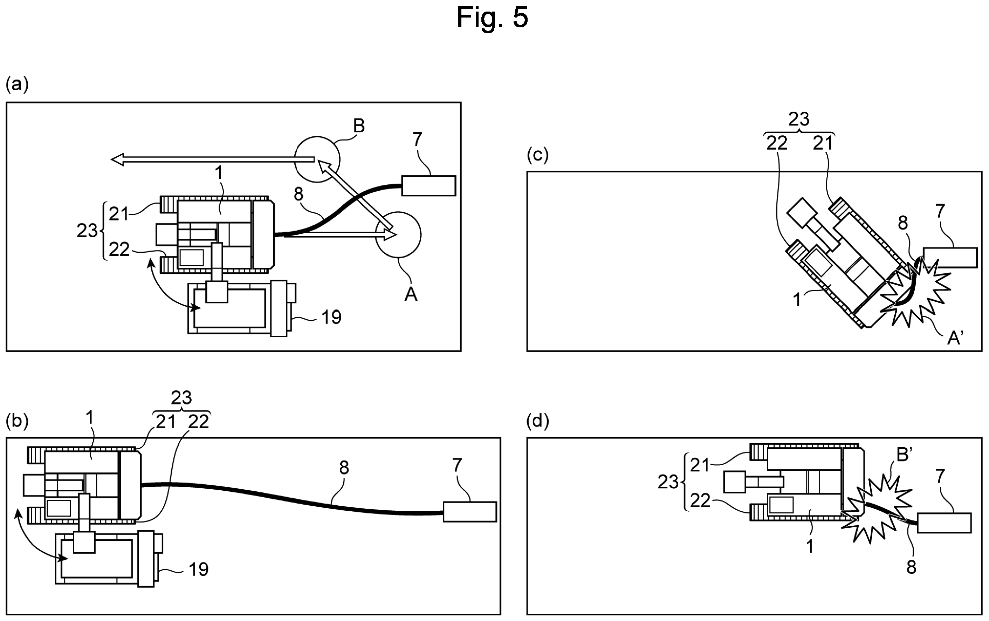

Next, a state in which the lower travel body of the construction machine runs over a cable, which is a conventional residual risk, will be described using Figs. 5.

Note that Figs. 5 show the operation of the electric hydraulic excavator 1 that has a so-called backhoe-type configuration in which a bucket is attached facing in a backward advancing direction. In this state, it is assumed that the electric hydraulic excavator 1 excavates the ground in the state shown in Fig. 5(a) and loads the excavated soil onto a dump truck 19 and then, moves to the position shown in Fig. 5(b) and performs the same operation. That is, after the work in Fig. 5(a), the electric hydraulic excavator 1 moves backward, turns right and moves forward, and then turns left and moves forward. Note that as described above, the cable reel device 6 is constantly biased in the reeling direction by the cable reel rotation drive device 17 of the cable drum 18, so that the cable 8 is kept stretched tautly along the ground.

At this time, the electric hydraulic excavator 1 turns at two locations denoted by "A" and "B" in Fig. 5(a). As a result, first, as shown in "A'" in Fig. 5(c), there is a risk of running over the cable 8 on the rear right side of the lower travel body 2 when turning right, and then, as shown in "B'" in Fig. 5(d), there is another risk of running over the cable 8 on the rear left side of the lower travel body 2 when turning left.

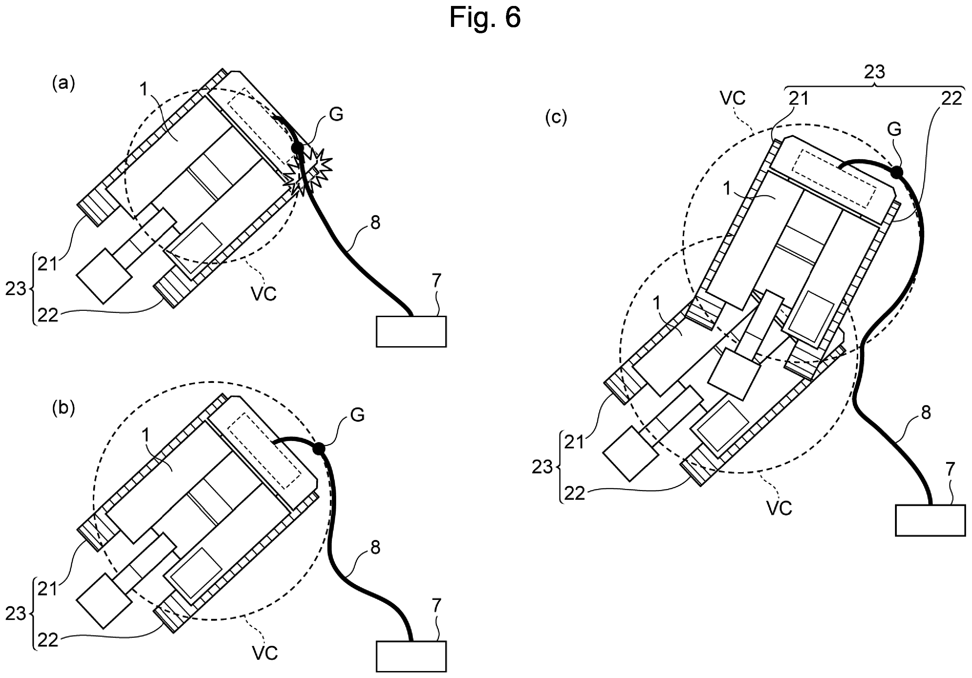

Such running over of the cable occurs depending on the positional relationship between the ground contact point G of the cable 8 and the electric hydraulic excavator 1. This will be described using Figs. 6.

In each drawing of Figs. 6, a reference sign VC is a virtual circle indicating the distance from the center of the lower travel body of the electric hydraulic excavator 1 to the ground contact point G of the cable 8. Fig. 6(a) shows a conventional state in which the cable drum 18 is constantly biased in the reeling direction to reel the cable 8, the cable 8 being substantially linearly taut with a part contacting the ground. In this case, if the distance between the ground contact point G of the cable 8 and the lower travel body 2 is short as shown in Fig. 6 (a), there has been a risk of the lower travel body 2 itself running over the cable 8 on the side of the disconnector 7 relative to the ground contact point G when it turns.

Meanwhile, in the present embodiment, the cable drum 18 is rotationally driven in the direction of unreeling under predetermined conditions to unreel the cable 8 from the cable drum 18. As a result, as shown in Fig. 6(b), the ground contact point G of the cable 8 is separated from the lower travel body 2 of the electric hydraulic excavator 1. This is because the cable 8, which is intended to be handled outdoors, has a high rigidity, and when the cable drum 18 is not biased in the reeling direction and no tension is exerted on the cable 8, the cable 8 maintains a gently deflected state for several meters before contacting the ground.

Therefore, when backward movement and turning are performed while the cable 8 is being unreeled as in the present embodiment, a certain distance or greater is secured between the lower travel body 2 of the electric hydraulic excavator 1 and the ground contact point G of the cable 8, as shown in Fig. 6(c), and the lower travel body 2 can turn without running over the cable 8.

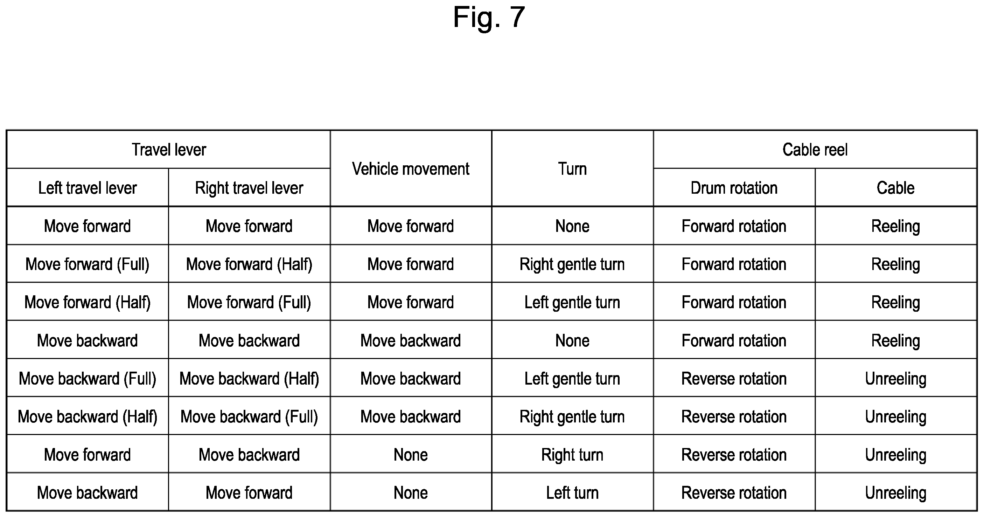

Next, the conditions for unreeling the cable 8 will be described using the table of Fig 7. As described above, the cable drum 18 to which the cable 8 is connected is located in the rear portion of the lower travel body 2 of the electric hydraulic excavator 1, and the cable 8 is mostly disposed on the rear side of the lower travel body 2 around the vehicle body. Therefore, when the vehicle body is moving forward as shown in the top three rows of Fig. 7, there is no possibility that the lower travel body 2 runs over the cable 8 and the drum rotation is kept in the forward direction.

Also, when moving backward without turning, the lower travel body 2 moves backward while maintaining the positional relationship between the lower travel body 2 and the ground contact point G of the cable 8 and the cable 8 is reeled, so that there is no possibility that the lower travel body 2 runs over the cable 8.

On the other hand, when moving backward while gently turning left or right with one of the right travel lever 12 and the left travel lever 13 set to backward movement (full) and the other set to backward movement (half), and when turning on the spot with one of the right travel lever 12 and the left travel lever 13 set to forward movement and the other set to backward movement, there is a possibility that the lower travel body 2 runs over the cable 8, as described in Figs. 5 and 6, in which cases, the cable drum 18 is rotated in reverse to unreel the cable 8 and the ground contact point G of the cable 8 is separated from the lower travel body 2*,* thereby avoiding the risk of the lower travel body 2 running over the cable 8.

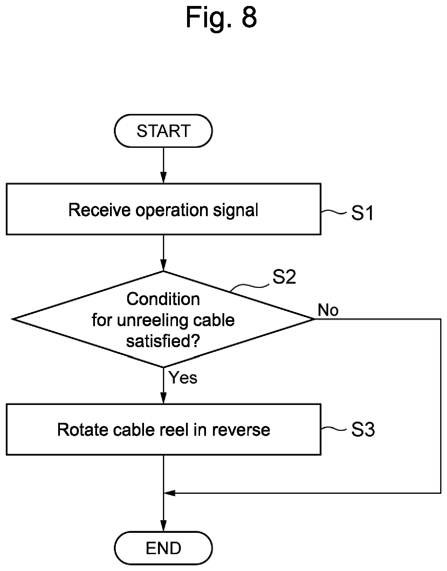

Fig. 8 is a flowchart showing processing executed by the controller 14 in the present embodiment. First, in step S1, the input/output section 141 of the controller 14 receives the operation signals from the right travel lever 12 and the left travel lever 13.

In step S2, the rotation direction control section 142 of the controller 14 checks the received operation signals against the table of Fig. 7 and determines whether the vehicle body operation instructed by the operation signals is an operation of unreeling the cable 8, that is, an operation of turning on the spot or while moving backward. If the vehicle body operation satisfies the conditions of unreeling the cable, the process proceeds to step S3, and if not, the processing ends.

In step S3, the rotation direction control section 142 of the controller 14 generates a control signal for rotating the cable drum 18 in reverse and transmits the signal to the cable reel rotation drive device 17 of the cable reel device 6. In response to the signal, the cable reel rotation drive device 17 drives the cable drum 18 in reverse.

As described above, according to the present embodiment, when turning or gently turning left or right while moving backward, a certain distance or greater is maintained between the lower travel body 2 and the ground contact point G of the cable 8, which makes it possible to prevent the cable 8 from contacting the lower travel body 2 or being run over. In addition, since there is no need to manually move the cable while the vehicle body is stopped, the lower travel body 2 can operate without stopping, thereby significantly reducing downtime.

### [Embodiment 2]

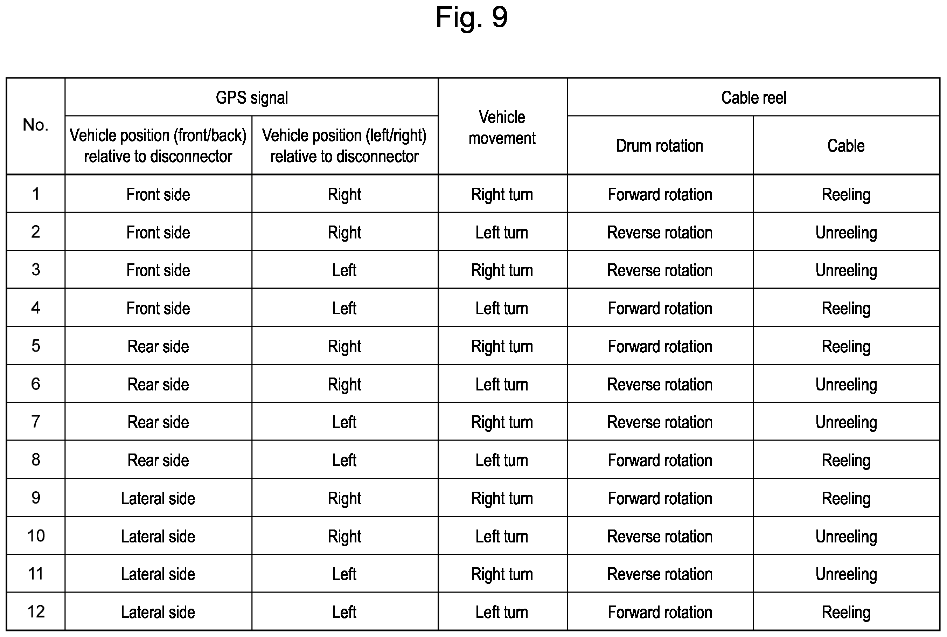

Next, the electric construction machine according to Embodiment 2 will be described using Figs. 9 to 11. In Embodiment 2, the vehicle body layout of the electric construction machine 1 and the functional configuration of the controller 14 are the same as those of Embodiment 1, and therefore, the description thereof will be omitted.

The present embodiment differs from Embodiment 1 in that position information obtained from the GPS 16 mounted outside the cab of the vehicle body is used. In Embodiment 1, only the vehicle body operation is set as the condition for unreeling the cable 8. Meanwhile, in the present embodiment, the condition is further subdivided, and the positional relationship between the vehicle body and the disconnector 7 and the vehicle body operation are set as the condition for unreeling the cable 8.

Fig. 9 is a table for explaining rotation control of the cable reel device 6 using a GPS signal in the present embodiment. "Vehicle body position relative to disconnector" in Fig. 9 indicates the position of the vehicle body as viewed from the disconnector 7 when standing at the same position as that of the disconnector 7 and facing the same direction as that of the vehicle body.

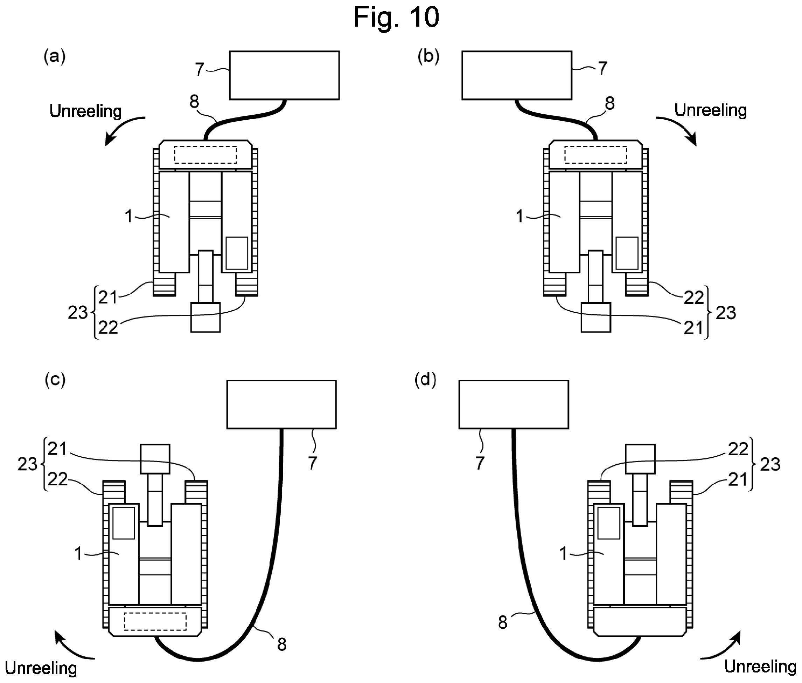

Nos. 1 and 2 in Fig. 9 correspond to Fig. 10(a). If turning in the left direction (left turn) is performed from the state shown in Fig. 10(a), there is a possibility that the cable 8 is run over on the rear left side of the lower travel body 2, and thus, the cable drum 18 is rotated in reverse to unreel the cable 8. Conversely, even if the right turn is performed in this state, since there is a certain distance between the rear right side of the lower travel body 2 and the cable 8 at the start of turning, there is no risk of running over the cable 8 for a while, and therefore, the cable drum 18 remains in the forward rotation.

Similarly, Nos. 3 and 4, 5 and 6, and 7 and 8 in Fig. 9 correspond to Figs. 10(b), 10(d), and 10(c), respectively. The conditions for unreeling the cable 8 are the same as those explained using Fig. 10(a).

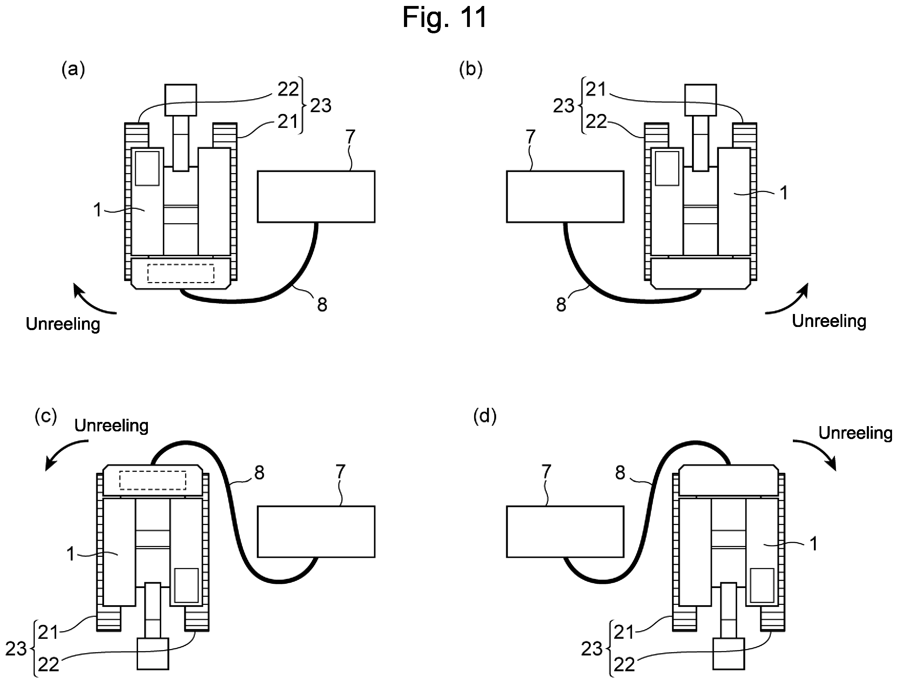

Further, Nos. 9, 10 and 11, and 12 in Fig. 9 correspond to (b), (c) and (a), and (d) of Fig. 11, respectively. In this case also, the conditions for unreeling the cable 8 are the same as those described in Fig. 9.

In view of the above, the following of the present embodiment can be said. That is, regarding the positional relationship between the disconnector 7 and the vehicle body, regardless of whether the vehicle body is present on the front, rear, or lateral side of the disconnector 7, when the vehicle body is on the left side of the disconnector 7, a right turn is the condition for unreeling the cable 8, and conversely, when the vehicle body is on the right side of the disconnector 7, a left turn is the condition for unreeling the cable 8.

From another point of view, regardless of the positional relationship between the disconnector 7 and the vehicle body, either a right turn or a left turn, whichever has a shorter turning distance before facing the direction of the disconnector 7 is the condition for unreeling the cable 8.

The flowchart showing the processing executed by the controller 14 in the present embodiment is also the same as that of Embodiment 1 shown in Fig. 8. However, in the present embodiment, the condition for unreeling the cable in step S2 is determined such that the relative positional relationship computation section 144 of the controller 14 determines the orientation of the vehicle body relative to the disconnector 7 from its own position information received from the GPS 16 and the position information on the disconnector 7 stored in the disconnector position information storage section 146, and checks the list in Fig. 9.

As described above, according to the present embodiment, the rotation of the cable drum 18 is controlled under more detailed conditions based on the positional relationship between the vehicle body and the disconnector 7, which makes it possible to more surely avoid the risk of the lower travel body 2 running over the cable 8*.*

### [Embodiment 3]

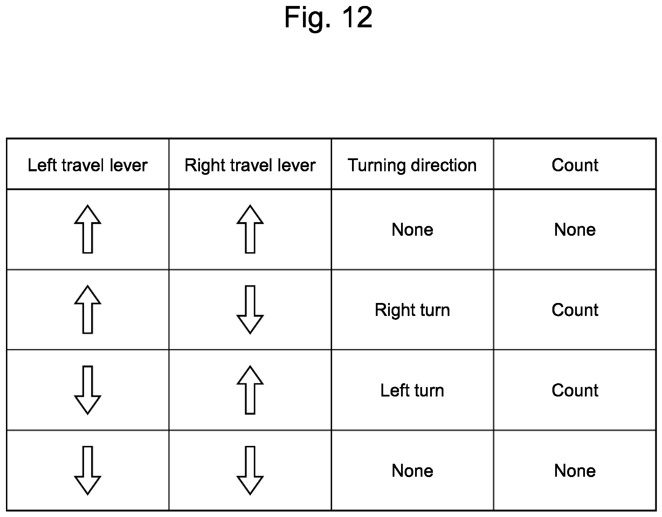

Next, the electric construction machine according to Embodiment 3 will be described using Fig. 12. In Embodiment 3, the vehicle body layout of the electric construction machine 1 and the functional configuration of the controller 14 are the same as those of Embodiment 1, and therefore, the description thereof will be omitted.

In the present embodiment, instead of changing the condition for unreeling the cable 8, the time while the cable 8 is unreeled as a turn is performed is counted and the operation of reeling the cable 8 by the amount for the time counted is added after completion of the turn.

Specifically, a case is assumed in which for example, a right turn for five seconds is made followed by a left turn for two seconds and then a right turn for a further three seconds. In this case, since the right turn and the left turn are performed for eight seconds and two seconds in total, respectively, six seconds are counted by subtracting two seconds from eight seconds. Then, after completion of the turn, the cable drum 18 is rotated in the forward direction for six seconds to reel the cable.

According to the present embodiment, since the cable 8 is reeled again after turning by the amount unreeled as a turn is performed, it is possible to quickly return the cable 8 to be in a constantly stretched state before turning and to avoid problems such as the remaining cable 8 interfering with other excavators.

### [Embodiment 4]

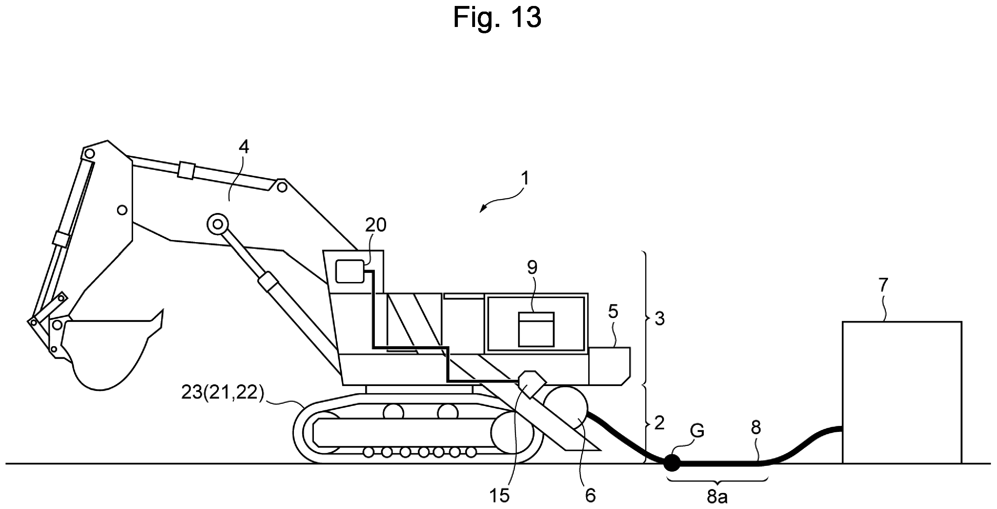

Fig. 13 is a vehicle body layout view of the electric hydraulic excavator 1 according to Embodiment 4. In the present embodiment, the camera 15 is mounted on the vehicle body of the electric hydraulic excavator 1, and a monitor 20 is mounted inside the cab.

In the present embodiment, the camera 15 is provided to monitor the ground contact point of the cable 8. That is, as also described in the above embodiments, it is important to separate the ground contact point G of the cable 8 from the lower travel body 2 of the electric hydraulic excavator 1, and in the present embodiment, the specific position of the ground contact point G is determined by directly monitoring the cable 8 using the camera 15, and if the position of the ground contact point G approaches within a predetermined threshold of the vehicle body (specifically, the rear end of the lower travel body 2), an alarm or the like is issued to the monitor 20 within the cab, external monitoring personnel, or the like.

As for a method of identifying the position of the ground contact point G, observation by personnel who monitors the monitor may be conceived, but automatic identification by an image analysis is preferable.

According to the present embodiment, it is possible to prepare for an unexpected event in which the ground contact point G of the cable 8 is not separated from the vehicle body due to the influence of an obstacle or the like, even if the cable 8 is unreeled during a turn in accordance with the operation signals received from the right travel lever 12 and the left travel lever 13, causing the lower travel body 2 to run over the cable 8.

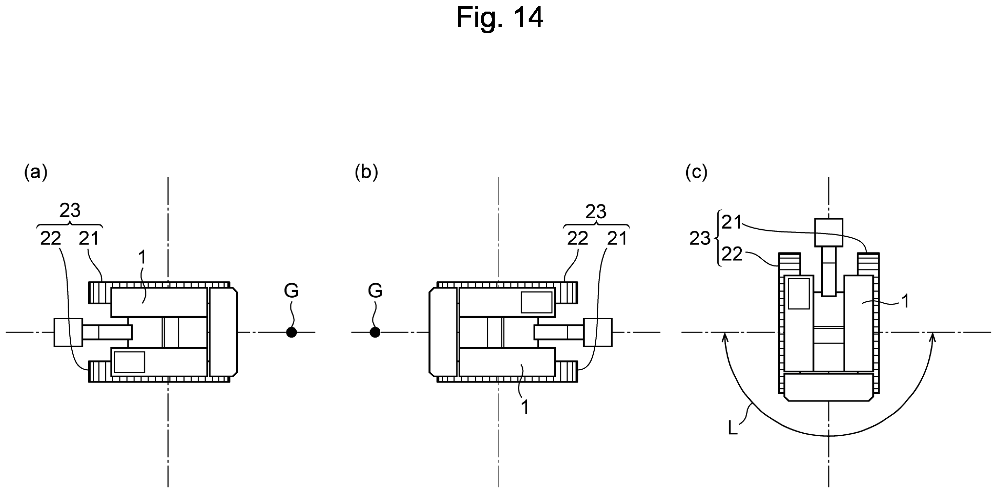

Finally, Figs. 14 are views for explaining a value of the maximum length of the cable 8 to be unreeled. While the cable 8 is unreeled as a turn is made, the tension of the cable 8 is kept constant, and it is thus considered that the positional relationship between the ground contact point G and the vehicle body is also kept constant during the time. Further, when the vehicle body turns by a maximum of 180 degrees as shown in Fig. 14(a) and Fig. 14(b), the positional relationship between the disconnector 7 and the vehicle body is reversed before and after the turn, and therefore, a maximum length L of the cable 8 to be unreeled during the turn is the length of a semiarch having, as its radius, the distance between the center of the vehicle body and the ground contact point G before turning, as shown in Fig. 14(c).

According to the above-described embodiments of the present invention, the following functional effects can be obtained.
(1) The electric construction machine according to the present invention has a lower travel body having travel devices that are provided as a left/right pair and that move forward/backward independently of each other, the electric construction machine being connected to an external power source via a cable to be driven, the electric construction machine including: a cable reel device that is provided in a rear end portion between the travel devices as the pair of the lower travel body, the cable reel device accommodating the cable in a wound state, reeling the cable through forward rotation drive, unreeling the cable through reverse rotation drive; and a controller that controls a rotation direction of the cable reel device in accordance with an operation state of the lower travel body.

With the aforementioned configuration, a certain distance is maintained between the vehicle body and the cable, which can prevent an accident of the cable coming into contact with the lower travel body or being run over.

(2) The controller drives the cable reel device to rotate in reverse when the lower travel body turns while moving backward or turns on a spot. When the construction machine performs such an operation, there is a risk of running over the cable, and thus, the present invention is applied.

(3) The cable reel rotation drive device is a three-phase induction motor, and the rotational driving of the cable reel device is performed by inverter control or by three-phase switching control. The construction machines to which the present invention is applied are often large, and therefore, it is preferable to use a high-output three-phase induction motor.

(4) The controller includes: a disconnector position information storage section that records position information on a disconnector to which the cable is connected; and a relative positional relationship computation section that computes a positional relationship between the electric construction machine and the disconnector based on the position information on the disconnector and position information on the electric construction machine, the controller being adapted to control the rotation direction of the cable reel device based on a computation result of the relative positional relationship computation section. This makes it possible to determine whether the cable is unreeled or not in accordance with the arrangement state of the cable that varies depending on the positional relationship between the disconnector and the construction machine.

(5) The controller causes the rotation direction of the cable reel device to be in a reverse direction when the lower travel body performs a right turn or a left turn, whichever has a shorter turning distance before facing a direction of the disconnector. As with (1), when the construction machine performs such an operation, there is a risk of running over the cable, and thus, the present invention is applied.

(6) The controller causes the rotation direction of the cable reel device to be in a reverse direction when the lower travel body makes a left turn in a state in which the electric construction machine is located on a right side of the disconnector as viewed from the disconnector or a right turn in a state in which the electric construction machine is located on a left side of the disconnector. As with (1) and (5), when the construction machine performs such an operation, there is a risk of running over the cable, and thus, the present invention is applied.

(7) The controller includes a counter section that counts time during which a signal from an operating lever is input, while the lower travel body makes a left or a right turn on a spot, the counter section adds the time during turning in one direction and subtracts the time during turning in an opposite direction, and after completion of the left or the right turn, the controller causes the rotation direction of the cable reel device to be in a forward direction by an amount of the time added. This makes it possible to add up the time while the cable is unreeled and allows the cable to quickly return to the stretched state before turning, by reeling the cable for an appropriate amount of time after turning.

(8) The controller includes a ground contact point determination section that receives an image from a camera observing a ground contact point of the cable and that determines a position of the ground contact point, and the ground contact point determination section issues a warning when the ground contact point of the cable approaches within a predetermined distance from the electric construction machine. This makes it possible to prepare for an unexpected event in which the ground contact point of the cable is not separated from the vehicle body due to the influence of an obstacle or the like, causing the lower travel body to run over the cable.

(9) The electric construction machine is an electric hydraulic excavator having an upper swing body that is provided in a swingable manner relative to the lower travel body. The electric construction machine is a typical example as a construction machine to which the present invention is applied.

Note that the present invention is not limited to the above-described embodiments, and various modifications are possible. For example, the above-described embodiments have been described in detail for easier understanding of the present invention, and the present invention is not necessarily limited to embodiments having all the described configurations. Further, it is possible to replace part of the configuration of one embodiment with the configuration of another embodiment. It is also possible to add the configuration of one embodiment to the configuration of another embodiment. Furthermore, for part of the configuration of each embodiment, deletion and addition of/replacement with another configuration are possible.

### Reference Signs List

- 1: Electric hydraulic excavator (electric construction machine)
- 2: Lower travel body
- 6: Cable reel device
- 7: Disconnector
- 8: Cable
- 9: Three-phase induction motor
- 12: Right travel lever
- 13: Left travel lever
- 14: Controller (control device)
- 15: Camera
- 16: GPS
- 21: Right travel device
- 22: Left travel device
- 23: Travel device
- 142: Rotation direction control section
- 143: Counter section
- 144: Relative positional relationship computation section
- 145: Ground contact point determination section
- 146: Disconnector position information storage section
- G: Ground contact point

## Claims

1. An electric construction machine including a lower travel body having travel devices that are provided as a left/right pair and that move forward/backward independently of each other, the electric construction machine being connected to an external power source via a cable to be driven, the electric construction machine comprising:
a cable reel device that is provided in a rear end portion between the travel devices as the pair of the lower travel body, the cable reel device accommodating the cable in a wound state, reeling the cable through forward rotation drive, unreeling the cable through reverse rotation drive; and
a controller that controls a rotation direction of the cable reel device in accordance with an operation state of the lower travel body.

2. The electric construction machine according to claim 1, wherein the controller drives the cable reel device to rotate in reverse when the lower travel body turns while moving backward or turns on a spot.

3. The electric construction machine according to claim 1, wherein the controller comprises: a disconnector position information storage section that records position information on a disconnector to which the cable is connected; and a relative positional relationship computation section that computes a positional relationship between the electric construction machine and the disconnector based on the position information on the disconnector and position information on the electric construction machine, the controller being adapted to control the rotation direction of the cable reel device based on a computation result of the relative positional relationship computation section.

4. The electric construction machine according to claim 3, wherein the controller causes the rotation direction of the cable reel device to be in a reverse direction when the lower travel body performs a right turn or a left turn, whichever has a shorter turning distance before facing a direction of the disconnector.

5. The electric construction machine according to claim 3, wherein the controller causes the rotation direction of the cable reel device to be in a reverse direction when the lower travel body makes a left turn in a state in which the electric construction machine is located on a right side of the disconnector as viewed from the disconnector or a right turn in a state in which the electric construction machine is located on a left side of the disconnector.

6. The electric construction machine according to claim 1,
wherein
the controller comprises a counter section that counts time during which a signal from an operating lever is input,
while the lower travel body makes a left or a right turn on a spot, the counter section adds the time during turning in one direction and subtracts the time during turning in an opposite direction, and
after completion of the left or the right turn, the controller causes the rotation direction of the cable reel device to be in a forward direction by an amount of the time added.

7. The electric construction machine according to claim 1,
wherein
the controller comprises a ground contact point determination section that receives an image from a camera observing a ground contact point of the cable and that determines a position of the ground contact point, and
the ground contact point determination section issues a warning when the ground contact point of the cable approaches within a predetermined distance from the electric construction machine.

8. The electric construction machine according to claim 1, wherein the electric construction machine is an electric hydraulic excavator having an upper swing body that is provided in a swingable manner relative to the lower travel body.
